# EUROPEAN PATENT APPLICATION

(11) **EP 4 775 852 A1**
(43) Date of publication of application: **15.07.2026**
(21) Application number: 25151554.0
(22) Date of filing: 13.01.2025
(51) Int. Cl.: F16H 57/04, B60K 1/00, B60K 17/16, F16H 48/10

(54) **GEARING FOR A VEHICLE**

(71) Applicant: ZF Friedrichshafen AG, 88046 Friedrichshafen (DE)
(72) Inventor: Kong, Yunlai, Shanghai, 201615 (CN); Li, Nan, Shanghai, 201615 (CN); Lai, Tao, Shanghai, 201615 (CN)
(74) Representative: WBH Wachenhausen Patentanwälte PartG mbB

(57) **Abstract**

The invention relates to a gearing (10) for a vehicle (1). The gearing (10) comprises a planetary gear set (70) with multiple planetary gear elements (71, 72, 73, 74, 75, 76). The gearing (10) further comprises a lubricant receiving space (20) and a chamber (30) for capturing lubricant of the gearing (10) churned from the lubricant receiving space (20) by one planetary gear element (73) as the one planetary gear element (73) rotates in a circumferential direction (92). The gearing (10) also comprises a guiding structure (40) for guiding the churned lubricant in the circumferential direction (92) between the guiding structure (40) and the one planetary gear element (73). The invention also relates to a vehicle (1) with such a gearing (10).

## Description

### Technical field

The present invention relates to a gearing for a vehicle and a vehicle having such a gearing.

### Prior art

Gearings for vehicles are known. In some cases, the gearing is provided with a planetary gear set with multiple elements. In such gearings, lubrication of the elements of the planetary gear set may be necessary. A lubricant pump may be provided for assisting a lubricant flow towards some elements for lubrication, for example by pressurizing the lubricant. Under certain conditions, the lubricant pump may be inoperable, for example in very low temperatures, such that lubrication may be insufficient.

### Summary of the invention

The present disclosure relates in a first aspect to a gearing for a vehicle. Examples of the vehicle may include a car, a truck, a bus and a working vehicle. Examples for the working vehicle may include a tractor, a combine harvester, a communal vehicle like a street sweeping machine, an excavator, a grader and a loader. The vehicle may comprise a driving unit for directly or indirectly driving the gearing by applying power thereto. The driving unit may comprise an internal combustion engine and/or an electric motor. The driving unit may receive energy from an energy storage, for example a tank or a battery, and convert it to rotational mechanical energy, for example to a driving power for the gearing. The gearing may comprise an input shaft and one or more output shafts. At least one output shaft of the gearing may be mechanically operatively connected to a drive element of the vehicle. If two elements are mechanically operatively connected, the elements are directly or indirectly coupled to each other so that a movement of one element causes a reaction of the other element. A mechanical operative connection can be established, for example, by frictional engagement or geometric fit. The mechanical operative connection can correspond to a meshing between corresponding gears of the two elements. Further elements, such as shafts, constant velocity joints and/or one or more gear sets, may be present between the elements. The gearing may be provided as a distribution gearing for distributing power between two output shafts. The gearing may also comprise a differential function. The drive element may be, for example, a wheel for contacting the ground or a drive wheel or sprocket for tracks. The vehicle may comprise a shiftable transmission disposed in a power flow between the driving unit and the drive element.

The gearing comprises a planetary gear set with multiple planetary gear elements. Examples for the planetary gear elements may include a sun gear, a planetary carrier, a planetary pin, a planetary bearing, a planetary gear and a ring gear. The gearing may comprise more than one planetary gear sets. In case multiple planetary gear sets are present, they may be mechanically operatively coupled and may be configured identically or differently from each other. The gearing may comprise other gear sets different from the planetary gear set, for example a spur gear set, a helical gear set and/or a bevel gear set.

The gearing comprises a lubricant receiving space. The lubricant receiving space may be configured to collect lubricant from the gearing, for example by draining the lubricant and/or by capturing free lubricant inside the gearing. The lubricant receiving space may be in fluid communication with a lubrication system receiving and/or supplying lubricant to the lubrication system. The lubrication system may be provided for lubricating and/or cooling parts of the gearing. The lubrication system may comprise a lubricant supply directly or indirectly in fluid communication with the lubricant receiving space. The lubricant may be configured for a lubrication functionality of lubricating an element of the gearing. The lubricant may also be configured for a cooling functionality of cooling the element of the gearing. The lubricant may be provided as an oil, for example. The lubrication supply may comprise elements for supplying and optionally draining lubricant, for example at least some of a supply channel, a drain channel, a pump, a tank and a filter. The pump may be mechanically or electrically operable for pressurizing the lubricant.

The lubricant receiving space may be formed as hollow space inside a housing. The lubricant receiving space may be formed as a sump at a bottom of the housing or separately from the housing. The housing may be provided as one or several casings for enclosing stationary and/or rotational components of the gearing and/or the driving unit. The housing may also be configured as a stationary member for providing support and for receiving forces and torques. The housing may comprise several housing portions. Each housing portion may be configured to accommodate and/or support different components. For example, the housing may comprise one or more gearing housing portions for enclosing and rotatably supporting the gearing. For example, the housing may comprise one or more driving unit housing portions for enclosing and rotatably supporting the driving unit. Furthermore, a housing portion may be configured to accommodate an element and to support a different element. For example, a housing portion may be configured to accommodate the driving unit and to support an element of the gearing in addition to an element of the driving unit. The housing portions may be mounted to each other or formed monolithically with each other.

The gearing comprises a chamber for capturing lubricant of the gearing churned from the lubricant receiving space by one planetary gear element as the one planetary gear element rotates in a circumferential direction. Churning generally arises when a rotating part is partly immersed in lubricant such that the entering and exiting of the rotating part into and out of lubricant churns or splashes lubricant into a surrounding environment, for example air. The gearing may be configured such that the one planetary gear element is partly immersed in lubricant during at least one operational state so as to churn at least a part of the lubricant. The at least one operational state may include a state of normal operation, a state of low temperature operation and/or any other regular operational state of the gearing. For example, a lubricant level in the lubricant receiving space in the at least one operational state may correspond to a lubricant level, at which the one planetary gear element is partly immersed in the lubricant, such that a rotation of the one planetary gear element results in lubricant churning. Churning may occur when the one planetary gear element rotates in the circumferential direction. The circumferential direction may correspond to one rotating direction of the one planetary gear element. Optionally, the gearing may be configured such that lubricant is churned also when the one planetary gear element rotates in an opposite circumferential and rotating direction. In any case, lubricant may be churned from the lubricant receiving space by the rotation of the one planetary gear element. The one planetary gear element may be any one of the elements of the planetary gear set. In one example, the one planetary gear element may be a ring gear.

The chamber may be formed in a position, towards which at least a part of the churned lubricant flows. The chamber may be formed monolithically with the housing or as a separate element. The chamber may comprise an inlet, for example an opening, facing a direction, from which the flowing churned lubricant is expected to reach the chamber. The chamber may comprise an internal volume for collecting the captured lubricant. The chamber may be in fluid communication with the lubrication system so as to influence an amount of lubricant present in the lubrication system. For example, collecting lubricant in the chamber may reduce the amount of lubricant present in the remainder of the lubrication system, and supplying lubricant from the chamber to the lubrication system may increase the amount of lubricant in the lubrication system. Alternatively or additionally, the chamber may be in fluid communication with a lubrication path for lubricating elements of the gearing, for example planetary gear elements. Alternatively or additionally, the chamber may be in fluid communication with a cooling path for cooling elements of the gearing. In any case, the lubricant captured in the chamber may be directly or indirectly used for lubricating and/or cooling elements of the gearing.

The gearing also comprises a guiding structure for guiding the churned lubricant in the circumferential direction between the guiding structure and the one planetary gear element. The guiding structure may be configured so as to convey at least parts of the churned lubricant between the guiding structure and the one planetary gear element to the chamber. For example, the guiding structure may be formed in the circumferential direction while being spaced apart from the one planetary gear element so as to form a churned lubricant path, along which the churned lubricant can be conveyed towards the chamber. The guiding structure may be formed monolithically with the housing or as a separate element. The guiding structure may have a shape of a rib or a wall extending around the one planetary gear element at a distance. One end of the guiding structure in the circumferential direction may be arranged at or below the lubricant level during at least one operational state, for example a low temperature operation. The other end of the guiding structure may be arranged near the chamber. For example, the other end of the guiding structure may be continuous with the chamber. In one example, the other end of the guiding structure may be formed monolithically with the chamber so as to form a common component comprising the chamber and the guiding structure.

With the gearing according to the first aspect, the churning of the lubricant caused by the rotation of the one planetary gear element can used for creating a flow of lubricant that allows capturing of the lubricant by the chamber. That is, by churning lubricant in a circumferential direction away from the lubricant receiving space, for example in a vertical direction against gravity, the potential energy of the churned lubricant is increased, such that a pumping effect for the lubricant can be provided by the one planetary gear element. The churned lubricant is effectively guided or conveyed to the chamber by means of the guiding structure. Furthermore, the chamber is configured to capture and optionally collect the churned lubricant. By capturing the churned lubricant, the captured lubricant is made usable, such that it can be provided to the lubrication system and/or used for creating a lubricant flow, for example for lubrication and/or cooling. Accordingly, the lubricant in the chamber is made available already by driving the one planetary gear element regardless of any operation of any lubricant pump. Therefore, even in cases, in which the lubricant pump cannot be operated, for example in especially low temperatures below -20°C, sufficient passive lubrication can be provided. Hence, the gearing of the first aspect is able to provide a reliable and passive lubrication for a planetary gear set.

In an embodiment, the chamber is arranged outside the one planetary gear element with respect to a radial direction. The radial direction may refer to a direction normal to a central axis of the planetary gear set. The chamber may be entirely outside the one planetary gear element. Alternatively, a part of the chamber may be axially offset from the one planetary gear element and may overlap the one planetary gear element in the radial direction. The chamber may comprise an inlet facing radially inwards towards the one planetary gear element. The inlet may be configured to allow lubricant churned in the circumferential direction to enter into the chamber. For example, the inlet may be formed as an opening having a shape that enables the churned lubricant reaching the chamber to enter the chamber. The inlet may face away from the chamber and towards the one planetary gear element in the radial direction or in a direction comprising radial, axial and/or circumferential components. The inlet may comprise a gap with constant or variable cross-section for allowing lubricant flow into the chamber. By providing the inlet as per the present embodiment, the chamber can be provided with a simple structure and can capture the lubricant with a high efficiency.

In an embodiment, the chamber comprises a circumferentially extending wall. The circumferentially extending wall may be one of a plurality of walls defining the chamber. The circumferentially extending wall may extend in the circumferential direction and an end of the circumferentially extending wall may be connected to another wall defining the chamber. The circumferentially extending wall may have a substantially constant thickness in the radial direction. The circumferentially extending wall may be arranged adjacently to the inlet in the circumferential direction. That is, the circumferentially extending wall may be arranged downstream from the inlet with respect to the circumferential direction, along which the churned lubricant is guided by the guiding structure. The circumferentially extending wall may be configured to delimit the chamber radially inwards. The circumferentially extending wall may also be arranged at least partly in the flow path of the churned lubricant. A leading edge of the circumferentially extending wall may be configured to deflect at least a part of the churned lubricant into the chamber. With the present embodiment, capturing efficiency can be improved.

In an embodiment, a circumferential end of the circumferentially extending wall adjacent to the inlet comprises a chamfered shape for facilitating entry of the lubricant churned in the circumferential direction. The leading edge may be a distal end of the circumferentially extending wall with respect to another wall connected thereto. By arranging the chamfered shape in this manner, namely at the leading edge of the circumferentially extending wall, the deflecting effect of the circumferentially extending wall for guiding lubricant into the chamber can be improved. The chamfered shape may comprise flat portions, rounded portions, curved portions and/or other shaped portions suitable for facilitating the entry of the churned lubricant in the chamber. In one example, the chamfered shape may be formed such that a cross-section of the circumferentially extending wall along the circumferential direction starts at a minimum thickness at the leading edge and gradually increases in the circumferential direction so as to reach the constant wall thickness of the circumferentially extending wall in a smooth manner allowing for laminar flow of the lubricant entering the chamber. By means of the present embodiment, the capturing efficiency of the chamber is improved.

In an embodiment, an inner radius of the circumferentially extending wall is smaller than an inner radius of the guiding structure for guiding the lubricant into the inlet. Both of the foregoing radii may have at least some clearance with respect to an outer radius of the one planetary gear element. That is, the guiding structure should comprise sufficient clearance to the one planetary gear element so as to allow the churned lubricant to flow therebetween. On the other hand, the circumferentially extending wall should comprise sufficient clearance to the one planetary gear element so as to reduce leakage of lubricant therebetween. Accordingly, reducing clearance between the circumferentially extending wall and the one planetary gear element allows less of the churned lubricant to flow therebetween and more of the churned lubricant to flow into the chamber. Thus, having the inner radius of the circumferentially extending wall be smaller than the inner radius of the guiding structure further enables capturing efficiency by deflecting more of the churned lubricant into the chamber.

In an embodiment, the gearing comprises a cover plate delimiting the chamber on at least one axial end side of the chamber. As described above, the chamber may be formed by comprising a plurality of walls defining its inner volume. Some of the walls may be arranged in a plane normal to the axial direction. In such a case, it may be necessary to delimit the chamber on one or both axial ends of the walls. In one example, one axial end side of the chamber, namely an axial end of the walls, may be delimited by the cover plate. In another example, both axial end sides of the chamber may be delimited by corresponding cover plates. The cover plate may be formed as a flat element with a shape complementary to the shape of the volume delimited by the walls when viewed in the axial direction. The cover plate may be formed separately from the chamber. The cover plate may be arranged at the corresponding axial end side and may provide sealing so as to prevent leakage from lubricant in the chamber at the axial end side covered by the cover plate. Thereby, the chamber can be provided with a simple structure.

In an embodiment, the guiding structure is formed continuously with the chamber. For example, the guiding structure may be formed continuously with another wall of the chamber other than the circumferentially extending wall. The transition between the guiding structure and the chamber, for example the other wall of the chamber, may be formed as a gradual transition for enabling or facilitating laminar flow of the lubricant entering the chamber. Thereby, capturing efficiency can be improved. In an embodiment, the guiding structure is formed monolithically with the chamber. Thereby, manufacturing can be simplified.

In an embodiment, at least one of the chamber and the guiding structure has a constant cross-section in an axial direction of the one planetary gear element. For example, in case the guiding structure is formed as a rib, its shape may be obtained by defining an elongated base shape and translating the base shape in the axial direction. The axial direction may be a direction parallel to the central axis of the planetary gear set. By means of the present embodiment, a simple structure can be provided for the guiding structure and/or the chamber.

In an embodiment, at least one of the chamber and the guiding structure is formed monolithically with a housing portion of the gearing. The housing portion of the gearing may be configured as described above. For example, the housing portion of the gearing may be a housing portion accommodating at least a part of the planetary gear set. Alternatively or additionally, the housing portion may be a housing portion accommodating an element of the driving unit, for example a stator. The housing portion formed monolithically with at least one of the chamber and the guiding structure may be provided by means of casting, forging or additive manufacturing, for example. By means of the present embodiment, the chamber in the guiding structure can be provided with a simple structure.

In an embodiment, the gearing comprises a lubrication path for supplying the lubricant from the chamber to another planetary gear element for lubrication. The lubrication path may comprise at least some channels, inlets and/or outlets for allowing flow of the lubricant to the other planetary gear element. The other planetary gear element may be a planetary gear element of the same planetary gear set as the one planetary gear element. Alternatively, the other planetary gear element may be a planetary gear element of another planetary gear set. The other planetary gear element may be configured to receive lubricant from the chamber and to guide it to elements for lubrication. For example, the lubrication path may extend_partly from the chamber through the housing and partly from the housing through the other planetary gear element. The lubrication path may provide a fluid communication between the chamber and the element to be lubricated. The element to be lubricated may be the other planetary gear element itself or another element in the vicinity of the other planetary gear element, to which the lubricant is supplied. At least a part of the lubrication path may extend in a gravity direction so as to convert potential energy of the lubricant into kinetic energy for increasing a flow rate of the lubricant towards the element to be lubricated. Accordingly, the lubrication path may be configured for assisting passive lubrication of the other planetary gear element with lubricant captured by the chamber.

In an embodiment, the other planetary gear element is formed as a planetary carrier of the planetary gear set. The planetary carrier may comprise a planetary pin on which a further planetary gear element is mounted. The lubrication path may comprise a lubrication path section and a further lubrication path section. The lubrication path section may be configured to guide the lubricant from the chamber to the further lubrication path section. For example, the lubrication path section may comprise one or more channels in fluid communication with the chamber. The lubrication path section may be at least partly formed in the housing. The lubrication path section may also comprise an outlet facing the planetary pin. The further lubrication path section may be formed in the planetary pin for receiving lubricant from the lubrication path section and for guiding the received lubricant towards the further planetary gear element. For example, the further lubrication path section may comprise one or more channels extending axially, radially and/or obliquely through the planetary pin. The further planetary gear element, which is to receive lubricant via the lubrication path and the further lubrication path for lubrication, may comprise at least one of a planetary bearing and a planetary gear. In one example, both a planetary bearing and a planetary gear are provided. In such an example, the planetary pin and the planetary bearing may be configured to enable a flow of at least a part of the lubricant received by the planetary pin to the planetary gear. A further element of the planetary gear set meshing with the planetary gear, for example a sun gear or a ring gear, may also directly or indirectly receive a part of the lubricant from the planetary pin.

In an embodiment, the lubricant receiving space is formed as a sump being integrated in a housing at a bottom of the housing. The housing may be a housing of the gearing or the driving unit formed as described above or a separate housing.

In an embodiment, the gearing comprises an input shaft, a first output shaft, a second output shaft, a first planetary gear set and a second planetary gear set. The first planetary gear set may comprise at least a first element, a second element and a third element. The second planetary gear set may comprise at least a first element, a second element and a third element. The input shaft may be non-rotatably connected to the first element of the first planetary gear set. The second element of the first planetary gear set may be non-rotatably connected to the first output shaft. The third element of the first planetary gear set may be non-rotatably connected to the first element of the second planetary gear set. The second element of the second planetary gear set may be non-rotatably connected to the housing as a stationary member. The third element of the second planetary gear set may be non-rotatably connected to the second output shaft. In the present embodiment, the one planetary gear element is the third element of the first planetary gear set.

A permanent non-rotatable connection is a connection in which the two elements are rigidly coupled together. The elements may be formed as separate elements connected to each other in a non-rotatable manner or integrally. A non-rotatable connection between two elements may also be established by a switching element, e.g. a clutch or a brake. The non-rotatable connection may be established when the switching element is actuated. The non-rotatable connection may be released when the switching element is no longer actuated. The first, second and third elements, for example, may each be a sun gear, a planetary carrier or a ring gear of the respective planetary gear set. In one example, each first element of the planetary gear sets may be a sun gear, each second element of the planetary gear sets may be a planetary carrier and each third element of the planetary gear sets may be a ring gear. The ring gear of the first planetary gear set may be formed integrally with the sun gear of the second planetary gear set. Thereby, a gearing with compact dimensions can be provided. The respective planetary gear set may be a plus or a minus planetary gear set. Each of the planetary gear sets may have planetary gears that may be rotatably mounted on the respective planetary carrier of the one planetary gear set, for example via planetary pins. The planetary gears may mesh with both the sun gear and the ring gear of the respective planetary gear set.

In a second aspect, the present disclosure relates to a vehicle. The vehicle comprises a gearing according to the first aspect. The respective advantages and further features can be taken from the description of the first aspect, wherein embodiments of the first aspect also form embodiments of the second aspect and vice versa.

### Brief description of drawings

Figure 1 shows a vehicle with a gearing according to an embodiment of the present disclosure.
Figure 2 schematically shows a general layout of the gearing of the vehicle of Figure 1.
Figure 3 schematically shows a gearing with the layout of Figure 2 according to an embodiment.
Figure 4 schematically shows a cross-section of the gearing along a first section line in Figure 3.
Figure 5 schematically shows a perspective view of a detail of the gearing of Figure 3.
Figure 6 schematically shows a cross-section of the gearing along a second section line in Figure 3.

### Detailed description of embodiments

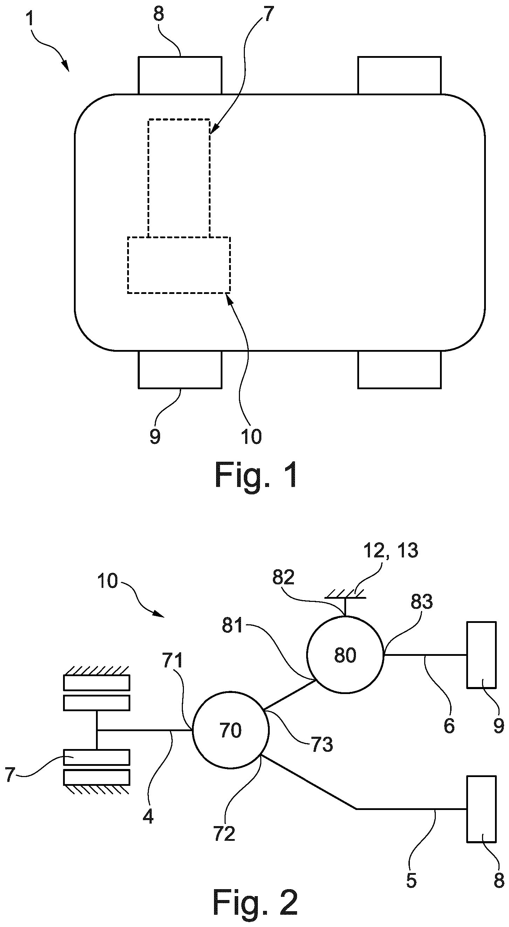

Figure 1 shows a vehicle 1 with a gearing 10 according to an embodiment of the present disclosure. The vehicle 1 is presently formed as a working vehicle. The vehicle 1 comprises a driving unit 7 presently formed as an electric motor. The gearing 10 is configured for transferring power input by the driving unit 7 to at least two drive elements 8, 9 presently formed as wheels.

Figure 2 schematically shows a general layout of the gearing 10 according to an embodiment of the present disclosure. In the present embodiment, the gearing 10 is formed as a distribution gearing with two planetary gear sets. As can be seen from Figure 2, the gearing 10 comprises a first planetary gear set 70 having a first element 71, a second element 72 and a third element 73. Furthermore, the gearing 10 comprises a second planetary gear set 80 having a first element 81, a second element 82 and a third element 83. Power generated by the driving unit 7 can be introduced into the gearing 10 via an input shaft 4. The input shaft 4 is mechanically operatively connected to the first element 71 of the first planetary gear set 70, here by being permanently non-rotatably connected. The third element 73 of the first planetary gear set 70 is permanently non-rotatably connected to the first element 81 of the second planetary gear set 80, here by being integrally formed. The second element 82 of the second planetary gear set 80 is permanently non-rotatably fixed to a housing 12, 13 for accommodating and supporting the first and second planetary gear sets 70, 80. A first output shaft 5 is mechanically operatively connected to the second element 72 of the first planetary gear set 70, in this case permanently non-rotatably connected, for outputting power to a first drive element 8. A second output shaft 6 is mechanically operatively connected to the third element 83 of the second planetary gear set 80, in this case permanently non-rotatably connected, for outputting power to a second drive element 9.

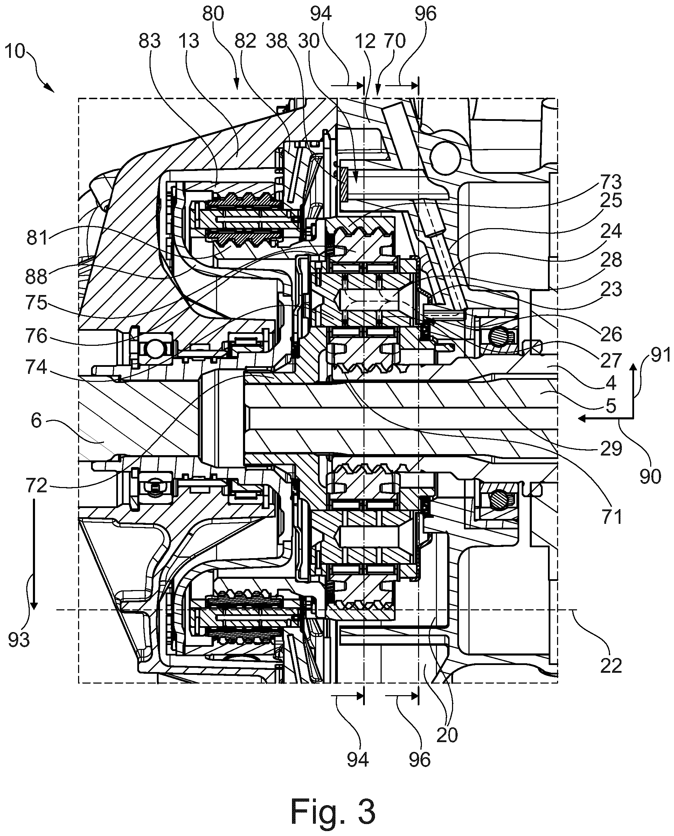

Figure 3 shows a gearing 10 according to an embodiment of the present disclosure. The gearing 10 of the present embodiment is provided according to the general layout shown in Figure 2. In the present embodiment, each of the first elements 71, 81 is formed as a sun gear, each of the second elements 72, 82 is formed as a planetary carrier and each of the third elements 73, 83 is formed as a ring gear. Furthermore, the first planetary gear set 70 and the second planetary gear set 80 are offset along an axial direction 90. Presently, the first planetary gear set 70 is mostly accommodated in a first housing portion 12 of the housing 12, 13 that also accommodates an unshown stator of the driving unit 7. The second planetary gear set 80 is accommodated in a second housing portion 13 of the housing 12, 13. The planetary carrier 82 of the second planetary gear set 80 is permanently non-rotatably connected to the second housing portion 13. The first and second housing portions 12, 13 are attached to each other. The first output shaft 5 is permanently non-rotatably connected to the planetary carrier 72 of the first planetary gear set 70, presently by means of a spline. The second output shaft 6 is presently permanently non-rotatably connected to the second ring gear 83 via a coupling element 88 and a further spline. Furthermore, the second output shaft 6 is arranged coaxially to input shaft 4 and the first output shaft 5 in the present embodiment.

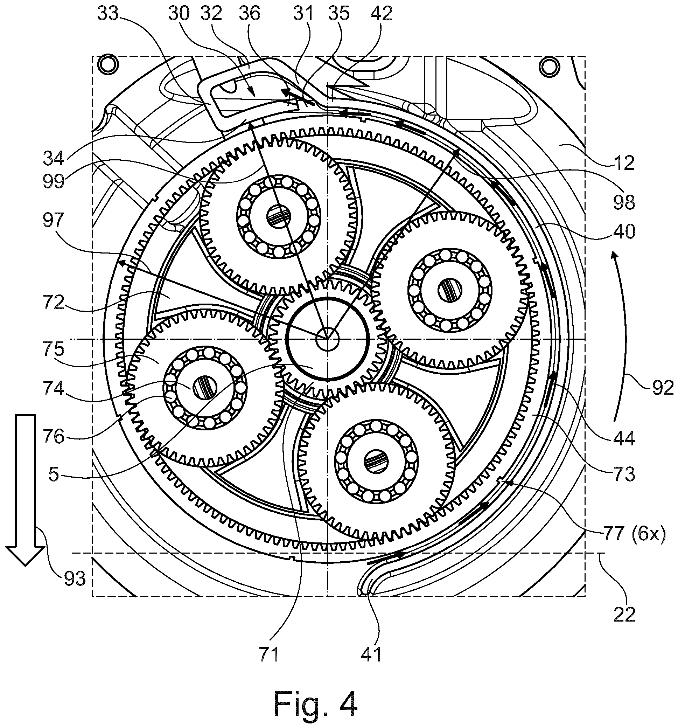

The gearing 10 comprises a chamber 30 for capturing lubricant churned by the first ring gear 73, namely the third element 73 of the first planetary gear set 70. The churning will be explained in the following with reference to Figure 3 as well as Figure 4, which shows schematically a cross-section of the gearing 10 along a first section line 94 in Figure 3. For allowing lubricant to be churned, the gearing 10 comprises a lubricant receiving space 20, which is presently formed as an inner volume of the housing portions 12, 13 at their bottom, namely on the lower side of Figure 3. During at least some operational states of the gearing 10, lubricant is present in the lubricant receiving space 20 at least to a lubricant level 22 indicated in Figure 3 as a dashed line. At the lubricant level 22, the first ring gear 73 is partly immersed in the lubricant. Accordingly, a rotation of the first ring gear 73 results in that at least some lubricant is churned in a circumferential direction 92 (see Figure 4) corresponding to the direction of rotation of the first ring gear 73.

The gearing 10 comprises a guiding structure 40 (see Figure 4) for guiding churned lubricant towards and into the chamber 30. In the present embodiment, the guiding structure 40 is formed as a rib extending in the circumferential direction 92 at a distance from the first ring gear 73. That is, an inner radius 98 of the guiding structure 40 is larger than an outer radius 97 of the first ring gear 73 so as to form a gap therebetween. A first circumferential end 41 of the guiding structure 40, namely a lower end in Figure 4, is located near the lubricant level 22 so as to enable churned lubricant to flow between the first ring gear 73 and the guiding structure 40. In the present embodiment, the first circumferential end 41 is immersed into the lubricant below the lubricant level 22 and comprises an optional rounded shape for funneling lubricant into a gap between the first ring gear 73 and the guiding structure 40. Accordingly, a churned lubricant path 44 is formed in the gap between the first ring gear 73 and the guiding structure 40. In the present embodiment, the first ring gear 73 comprises a plurality of churning structures 77, namely six churning structures 77, for increasing flow rate in the churned lubricant path and thus for improving the churning effect of the first ring gear 73. The churning structures 77 are presently formed as notches in an outer circumferential surface of the first ring gear 73. A second circumferential end 42 of the guiding structure 40, namely a top end in Figure 4, is formed at an upper path of the first ring gear 73 with respect to a gravity direction 93. In the present embodiment, the second circumferential end 42 is at a topmost position in the circumferential direction 92.

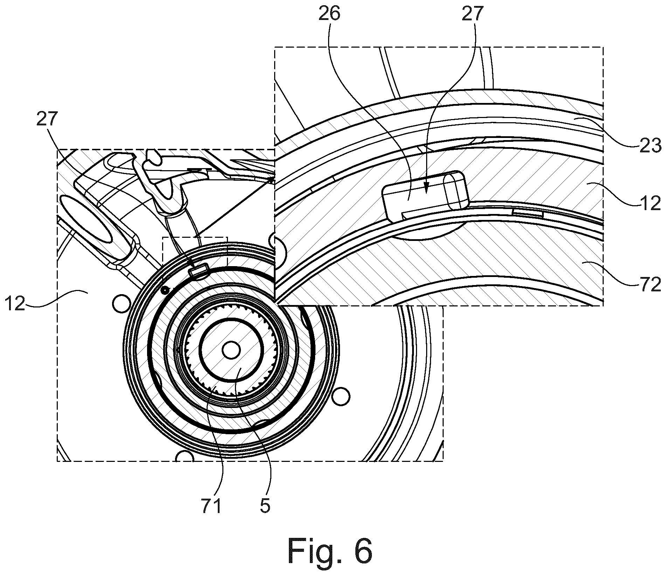

The chamber 30 is presently formed continuously with the second circumferential end 42, namely monolithically with the guiding structure 40. At least a part of the churned lubricant is captured by the chamber 30. In the present embodiment, the chamber 30 is delimited on one axial end side by a cover plate 38 (see Figure 3) and is monolithically formed with the first housing portion 12 on the other axial end side, namely the right side in Figure 3. The chamber 30 is connected to a first channel 25, which extends radially inwards through the first housing portion 12 to a second channel 26 extending in the axial direction 90 towards the first planetary carrier 72, namely the second element 72 of the first planetary gear set 70. While flowing through the first channel 25, the lubricant is assisted by the gravity acting in the gravity direction 93 so as to increase its flow speed, thereby providing a passive means for enabling lubricant flow in the first channel 25 and the second channel 26. At an axial end of the second channel 26, the lubricant exits through an outlet 27 shown in detail in Figure 6, which is a cross-section of the gearing 10 along a second section line 96 in Figure 3. The exiting lubricant is guided by a baffle 23 to a planetary pin 74 attached to the first planetary carrier 72 (see Figure 3). An axially extending third channel 28 and a plurality of radially extending fourth channels 29 are formed in the planetary pin 74 so as to guide the lubricant to a planetary gear 75 in the planetary bearing 76 mounted on the planetary pin. Thereby, a lubrication path 24 from the chamber 30 to the first planetary carrier 72, specifically the planetary gear 75 and the planetary bearing 76, is provided. Along the lubrication path 24, the first and second channels 25, 26 formed in the first housing portion 12 form a first lubrication path section, and the third and fourth channels 28, 29 form a second lubrication path section.

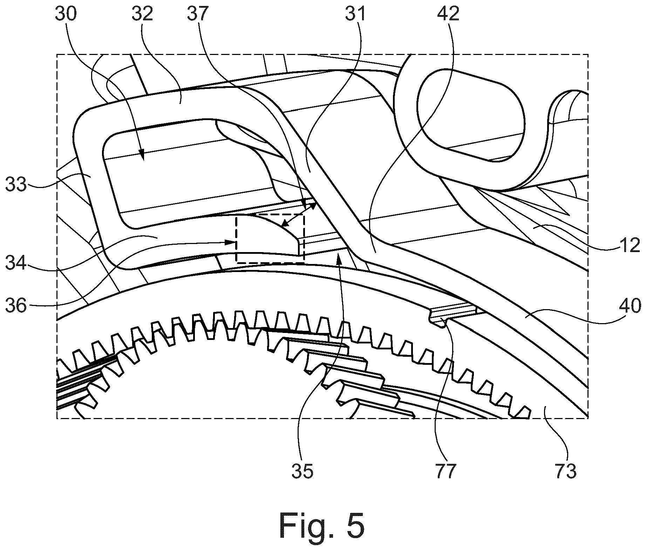

Figure 5 shows a perspective view of a detail of the gearing 10 of Figure 3, namely details concerning the chamber 30 which will be explained in the following with reference to Figures 4 and 5. In the present embodiment, the chamber 30 is formed by means of four walls having a constant cross-section when viewed in the axial direction 90. A first wall 31 is connected continuously with the second circumferential end 42 and extends obliquely in the circumferential direction 92 and outwards in a radial direction 91. A second wall 32 is connected to the first wall 31 and extends in the circumferential direction 92. A third wall 33 is connected to the second wall 32 and extends radially inwards. A fourth wall 34 is connected to the third wall 33 and extends in an opposite circumferential direction opposite to the circumferential direction 92. That is, the fourth wall 34 is a circumferentially extending wall delimiting the chamber radially inwards. A distal end of the fourth wall 34 with respect to the third wall 33 extends towards the second circumferential end 42 of the guiding structure 40 without reaching it. Accordingly, an inlet 35 is formed as a circumferential gap between the distal end of the fourth wall 34 and the second circumferential end 42 of the guiding structure 40. Thereby, churned lubricant can flow into the chamber 30.

The fourth wall 34 is arranged downstream from the inlet 35 with respect to the circumferential direction 92, which is also a flow direction of the churned lubricant. Thus, the distal end of the fourth wall 34 presently serves as a leading edge. In the present embodiment, an inner radius 99 of the fourth wall 34 is smaller than the inner radius 98 of the guiding structure 40 (see Figure 4) so as to increase a capture rate of lubricant into the chamber 30 and to reduce leakage of lubricant between the fourth wall 34 and the first ring gear 73. For further improving the capturing rate of lubricant flowing to the chamber, a chamfered shape 36 is provided at the distal end of the fourth wall 34 (see Figure 5). Compared to a fourth wall not comprising the chamfered shape 36, a gap 37 between the distal end of the fourth wall 34 and the first wall 31 is enlarged so as reduce pressure drop of lubricant entering the chamber 30. The chamfered shape 36 is also presently configured to enable a laminar flow of the lubricant flowing into the chamber 30.

With the gearing 10 according to the present embodiment, rotation of the one planetary gear element, namely the first ring gear 73, is used for churning and capturing lubricant. Accordingly, a gearing with a passive lubrication function is provided, in which lubricant can be made available for lubrication and/or cooling without the necessity for an operational lubricant pump.

### Reference signs

- 1: vehicle
- 4: input shaft
- 5, 6: output shaft
- 7: driving unit
- 8, 9: drive element
- 10: gearing
- 12, 13: housing
- 20: lubricant receiving space
- 22: lubricant level
- 23: baffle
- 24: lubrication path
- 25, 26, 28, 29: channel
- 27: outlet
- 30: chamber
- 31, 32, 33, 34: wall
- 35: inlet
- 36: chamfered shape
- 37: gap
- 38: cover plate
- 40: guiding structure
- 41, 42: circumferential end
- 44: churned lubricant path
- 70, 80: planetary gear set
- 71, 81: first element
- 72, 82: second element
- 73, 83: third element
- 74: planetary pin
- 75: planetary gear
- 76: planetary bearing
- 77: churning structure
- 88: coupling element
- 90: axial direction
- 91: radial direction
- 92: circumferential direction
- 93: gravity direction
- 94, 96: section line
- 97, 98, 99: radius

## Claims

1. A gearing (10) for a vehicle (1) comprising a planetary gear set (70) with multiple planetary gear elements (71, 72, 73, 74, 75, 76), a lubricant receiving space (20), a chamber (30) for capturing lubricant of the gearing (10) churned from the lubricant receiving space (20) by one planetary gear element (73) as the one planetary gear element (73) rotates in a circumferential direction (92) and a guiding structure (40) for guiding the churned lubricant in the circumferential direction (92) between the guiding structure (40) and the one planetary gear element (73).

2. The gearing (10) according to claim 1, **characterized in that** the chamber (30) is arranged outside the one planetary gear element (73) with respect to a radial direction (91) and comprises an inlet (35) facing radially inwards towards the one planetary gear element (73) and being configured to allow lubricant churned in the circumferential direction (92) to enter into the chamber (30).

3. The gearing (10) according to claim 2, **characterized in that** the chamber (30) comprises a circumferentially extending wall (34) arranged adjacently to the inlet (35) in the circumferential direction (92) and configured to delimit the chamber (30) radially inwards.

4. The gearing (10) according to claim 2 or 3, **characterized in that** a circumferential end of the circumferentially extending wall (34) adjacent to the inlet (35) comprises a chamfered shape (36) for facilitating entry of the lubricant churned in the circumferential direction (92).

5. The gearing (10) according to claim 3 or 4, **characterized in that** an inner radius (99) of the circumferentially extending wall (34) is smaller than an inner radius (98) of the guiding structure (40) for guiding the lubricant into the inlet (35).

6. The gearing (10) according to any one of the preceding claims, **characterized by** comprising a cover plate (38) delimiting the chamber (30) on at least one axial end side of the chamber (30).

7. The gearing (10) according to any one of the preceding claims, **characterized in that** the guiding structure (40) is formed continuously with the chamber (30).

8. The gearing (10) according to claim 7, **characterized in that** the guiding structure (40) is formed monolithically with the chamber (30).

9. The gearing (10) according to any one of the preceding claims, **characterized in that** at least one of the chamber (30) and the guiding structure (40) has a constant cross-section in an axial direction (90) of the one planetary gear element (73).

10. The gearing (10) according to any one of the preceding claims, **characterized in that** at least one of the chamber (30) and the guiding structure (40) is formed monolithically with a housing portion of the gearing (10).

11. The gearing (10) according to any one of the preceding claims, **characterized by** comprising a lubrication path (24) for supplying the lubricant from the chamber (30) to another planetary gear element (72) for lubrication.

12. The gearing (10) according to claim 11, **characterized in that** the other planetary gear element (72) is formed as a planetary carrier of the planetary gear set (70) and comprises a planetary pin (74) on which a further planetary gear element (75; 76) is mounted, and **in that** the lubrication path (24) comprises a lubrication path section (25, 26, 27) and a further lubrication path section (28, 29), the lubrication path section (25, 26, 27) being configured to guide the lubricant from the chamber (30) to the further lubrication path section (28, 29) and the further lubrication path section (28, 29) being formed in the planetary pin (74) for receiving lubricant from the lubrication path section (25, 26, 27) and for guiding the received lubricant towards the further planetary gear element (75; 76).

13. The gearing (10) according to any one of the preceding claims, **characterized in that** the lubricant receiving space (20) is formed as a sump being integrated in a housing (12) at a bottom of the housing (12).

14. The gearing (10) according to any one of the preceding claims, **characterized by** comprising an input shaft (4), a first output shaft (5), a second output shaft (6), a first planetary gear set (70) and a second planetary gear set (80), wherein the first planetary gear set (70) comprises at least a first element (71), a second element (72) and a third element (73) and the second planetary gear set (80) comprises at least a first element (81), a second element (82) and a third element (83), wherein the input shaft (4) is non-rotatably connected to the first element (71) of the first planetary gear set (70), the second element (72) of the first planetary gear set (70) is non-rotatably connected to the first output shaft (5), the third element (73) of the first planetary gear set (70) is non-rotatably connected to the first element (81) of the second planetary gear set (80), the second element (82) of the second planetary gear set (83) is non-rotatably connected to the housing (12; 13), and the third element (23) of the second planetary gear set (80) is non-rotatably connected to the second output shaft (6), and wherein the one planetary gear element (73) is the third element (73) of the first planetary gear set (70).

15. A vehicle (1) comprising a gearing (10) according to any one of the preceding claims.

## Amended claims

### Amended claims in accordance with Rule 137(2) EPC.

1. A gearing (10) for a vehicle (1) comprising a first planetary gear set (70) with multiple planetary gear elements (71, 72, 73, 74, 75, 76), a second planetary gear set (80), a lubricant receiving space (20), a chamber (30) for capturing lubricant of the gearing (10) churned from the lubricant receiving space (20) by one planetary gear element (73) of the first planetary gear set (70) as the one planetary gear element (73) rotates in a circumferential direction (92), a guiding structure (40) for guiding the churned lubricant in the circumferential direction (92) between the guiding structure (40) and the one planetary gear element (73), and a lubrication path (24) for supplying the lubricant from the chamber (30) to another planetary gear element (72) for lubrication, wherein the other planetary gear element (72) is a planetary gear element of the same planetary gear set (70) as the one planetary gear element (73), and wherein the first planetary gear set (70) and the second planetary gear set (80) are offset along an axial direction (90).

2. The gearing (10) according to claim 1, **characterized in that** the chamber (30) is arranged outside the one planetary gear element (73) with respect to a radial direction (91) and comprises an inlet (35) facing radially inwards towards the one planetary gear element (73) and being configured to allow lubricant churned in the circumferential direction (92) to enter into the chamber (30).

3. The gearing (10) according to claim 2, **characterized in that** the chamber (30) comprises a circumferentially extending wall (34) arranged adjacently to the inlet (35) in the circumferential direction (92) and configured to delimit the chamber (30) radially inwards.

4. The gearing (10) according to claim 2 or 3, **characterized in that** a circumferential end of the circumferentially extending wall (34) adjacent to the inlet (35) comprises a chamfered shape (36) for facilitating entry of the lubricant churned in the circumferential direction (92).

5. The gearing (10) according to claim 3 or 4, **characterized in that** an inner radius (99) of the circumferentially extending wall (34) is smaller than an inner radius (98) of the guiding structure (40) for guiding the lubricant into the inlet (35).

6. The gearing (10) according to any one of the preceding claims, **characterized by** comprising a cover plate (38) delimiting the chamber (30) on at least one axial end side of the chamber (30).

7. The gearing (10) according to any one of the preceding claims, **characterized in that** the guiding structure (40) is formed continuously with the chamber (30).

8. The gearing (10) according to claim 7, **characterized in that** the guiding structure (40) is formed monolithically with the chamber (30).

9. The gearing (10) according to any one of the preceding claims, **characterized in that** at least one of the chamber (30) and the guiding structure (40) has a constant crosssection in an axial direction (90) of the one planetary gear element (73).

10. The gearing (10) according to any one of the preceding claims, **characterized in that** at least one of the chamber (30) and the guiding structure (40) is formed monolithically with a housing portion of the gearing (10).

11. The gearing (10) according to any one of the preceding claims, **characterized in that** the other planetary gear element (72) is formed as a planetary carrier of the first planetary gear set (70) and comprises a planetary pin (74) on which a further planetary gear element (75; 76) is mounted, and **in that** the lubrication path (24) comprises a lubrication path section (25, 26, 27) and a further lubrication path section (28, 29), the lubrication path section (25, 26, 27) being configured to guide the lubricant from the chamber (30) to the further lubrication path section (28, 29) and the further lubrication path section (28, 29) being formed in the planetary pin (74) for receiving lubricant from the lubrication path section (25, 26, 27) and for guiding the received lubricant towards the further planetary gear element (75; 76).

12. The gearing (10) according to any one of the preceding claims, **characterized in that** the lubricant receiving space (20) is formed as a sump being integrated in a housing (12) at a bottom of the housing (12).

13. The gearing (10) according to any one of the preceding claims, **characterized by** comprising an input shaft (4), a first output shaft (5) and a second output shaft (6), , wherein the first planetary gear set (70) comprises at least a first element (71), a second element (72) and a third element (73) and the second planetary gear set (80) comprises at least a first element (81), a second element (82) and a third element (83), wherein the input shaft (4) is non-rotatably connected to the first element (71) of the first planetary gear set (70), the second element (72) of the first planetary gear set (70) is non-rotatably connected to the first output shaft (5), the third element (73) of the first planetary gear set (70) is non-rotatably connected to the first element (81) of the second planetary gear set (80), the second element (82) of the second planetary gear set (83) is non-rotatably connected to the housing (12; 13), and the third element (23) of the second planetary gear set (80) is non-rotatably connected to the second output shaft (6), and wherein the one planetary gear element (73) is the third element (73) of the first planetary gear set (70).

14. The gearing (10) according to claim 13, **characterized in that** the other planetary gear element (72) is formed as a planetary carrier (72) of the first planetary gear set (70).

15. A vehicle (1) comprising a gearing (10) according to any one of the preceding claims.
